(19) Europäisches Patentamt

European Patent Office

Office européen des brevets

(11) **EP 1 324 033 B1**

(12) **EUROPÄISCHE PATENTSCHRIFT**

(45) Veröffentlichungstag und Bekanntmachung des Hinweises auf die Patenterteilung:
**20.09.2006 Patentblatt 2006/38**

(21) Anmeldenummer: **01130574.5**

(22) Anmeldetag: **21.12.2001**

(51) Int Cl.:
***G01N 30/36*** *(2006.01)*

(54) **Verfahren zur Bereitstellung von Volumenströmen von Fluiden**

Method for providing flow rates for fluids

Procédé pour fournir des débits volumétriques de fluides

(84) Benannte Vertragsstaaten:
**DE FR GB**

(43) Veröffentlichungstag der Anmeldung:
**02.07.2003 Patentblatt 2003/27**

(73) Patentinhaber: **Agilent Technologies, Inc. (a Delaware corporation)**
**Palo Alto, CA 94303 (US)**

(72) Erfinder:
• **Weissgerber, Hans-Georg**
**75334 Straubenhardt (DE)**
• **Glatz, Bernd**
**71292 Friolzheim (DE)**

(74) Vertreter: **Barth, Daniel Mathias et al**
**Agilent Technologies Deutschland GmbH**
**Patentabteilung**
**Herrenberger Strasse 130**
**71034 Böblingen (DE)**

(56) Entgegenhaltungen:
**EP-A- 0 495 255      EP-A- 0 840 116**
**WO-A-96/08718      DE-A- 19 914 358**
**US-A- 5 040 126**

**Beschreibung**

Die Erfindung betrifft ein Verfahren zur Bereitstellung von Volumenströmen von Fluiden in kleine Durchflußquerschnitte aufweisenden Kanälen bzw. Kapillaren, insbesondere chromatographischen Trennsäulen, für die analytische Flüssigkeitsmeßtechnik, insbesondere für die analytische Flüssigkeitschromatographie, wobei eine Fördervorrichtung zur Förderung eines Volumenstromes des Fluids durch einen Arbeitskanal und eine Druckmeßvorrichtung zum Messen des Druckes in dem Arbeitskanal vorgesehen ist, und wobei eine Messung des Volumenstromes möglich ist.

Ein derartiges Verfahren wird bislang beispielsweise in der Flüssigkeitschromatographie, insbesondere der Hochdruckflüssigkeitschromatographie (HPLC) eingesetzt. Die HPLC wird entsprechend den jeweils verwendeten Innendurchmessern der Trennsäulen eingeteilt in die sogenannte "Normal-Bore-Chromatographie", unter Verwendung von Trennsäulen mit Innendurchmessern im Bereich von etwa 3 bis 5 mm, die "Micro-Bore-Chromatographie" unter Verwendung von Trennsäulen mit Innendurchmessern im Bereich von etwa 1 bis 2 mm, der "Capillary-LC-Chromatographie", unter Verwendung von Trennsäulen mit Innendurchmessern im Bereich von etwa 180 bis 320 $\mu$m und der "Nano-LC-Chromatographie", unter Verwendung von Trennsäulen mit Innendurchmessern von kleiner oder gleich 100 $\mu$m.

Entsprechend dem Anwendungsgebiet müssen die geförderten Flußraten dem Säuleninnendurchmesser angepaßt werden. Während in der Normal-Bore-Technik und in der Micro-Bore-Technik Flußraten im Bereich von ml/min und $\mu$l/min üblich sind, müssen in der Nano-LC-Technik Flußraten in der Gößenordnung von nur noch wenigen 100 nl/min realisiert werden. Die Flußraten werden üblicherweise so eingestellt, daß eine lineare Fließgeschwindigkeit innerhalb der Trennsäule von etwa 1 bis 2 mm/sec erreicht wird. Dies ist wichtig, weil die Effizienz einer Trennsäule von der Flußrate abhängt.

Die Verwendung von Trennsäulen mit Innendurchmessern von weniger als 180 $\mu$m ist von zunehmendem Interesse, nicht nur in der Hochdruckflüssigkeitschomatographie, sondern auch im Bereich von anderen mikrofluidischen Systemen. Während in der Hochdruckflüssigkeitschromatographie der Volumenstrom üblicherweise mittels einer hydraulischen Pumpe generiert wird, werden in den mikrofluidischen System die Volumenströme häufig per Elektroosmose erzeugt. Es versteht sich, daß auch hydraulische Pumpen mit mikrofluidischen Systemen kombiniert werden können. Bei einem derartigen mikrofluidischen System kann es sich insbesondere um einen Mikrofluid-Chip handeln.

Ein weiterer wichtiger Gesichtspunkt im Zusammenhang mit einer optimalen Flußrate ist die Detektion der zu analysierenden Substanzen. In zunehmendem Maße werden massenselektive Detektoren eingesetzt. Die Verwendung derartiger Detektoren erfordert eine geeignete Aufbereitung und Zuführung der zu analysierenden Substanzen. Hierzu kann der Arbeitsstrom nach der Trennsäule zerstäubt, ionisiert und teilweise oder ganz getrocknet werden. Die einzelnen Ionen fliegen in den Eingang des Detektors, während der eventuell noch vorhandene Überschuß an Lösungsmittel Abfall ist. Für das Erzeugen der Ionen sind unterschiedliche Verfahren bekannt. Manche Verfahren funktionieren nur innerhalb eines bestimmten Durchflußraten- bzw. Volumenstrombereichs. Bei kleineren oder größeren Flüssen funktioniert das Verfahren nicht mehr oder wenigstens stark eingeschränkt, d.h. es ist eine weniger empfindliche oder keine Detektion mehr möglich.

Je kleiner die Flußraten sind, um so wichtiger werden Einflüsse von Volumina des Systems, insbesondere des Totvolumens bzw. des Verzögerungsvolumens. Für den hier interessierenden Fall der Anwendung von extrem kleinen Flußraten müssen diese Volumina ebenfalls mit einer kleinen Flußrate gespült werden. Denn andernfalls können thermodynamische Effekte sowohl die Trennsäule als auch den Detektor aus dem Gleichgewicht bringen, so daß unerwünschte Effekte auftreten können. Ferner sind hohe Flußraten schon alleine wegen den Verbindungskapillaren mit sehr kleinen internen Durchmessern und des dadurch bedingten Druckabfalls nicht möglich. Um eine hohe Effektivität der Analyse zu gewährleisten, sollten die oben genannten Volumina so klein wie möglich sein. Idealer Weise sollte eine Spülzeit von einer Minute ausreichen, um das Verzögerungsvolumen mit der gewünschten kleinen Flußrate zu spülen.

In einem chromatographischen System hängen die Parameter Fluß und Druck immer über den hydraulischen Widerstand der Trennsäule und des Systems zusammen. Es hat sich jedoch in der Praxis durchgesetzt, den Fluß vorzugeben bzw. zu definieren. Die lineare Fließgeschwindigkeit durch die Säule muß unabhängig von den geförderten Lösungsmitteln und den Restriktionen konstant gehalten werden. Dies stellt auch kein Problem dar, solange die Flußraten groß genug sind, um entweder eine direkte Förderung der gewünschten Flußrate oder eine Messung der Flußraten zu ermöglichen. Sollen jedoch extrem kleine Flußraten im Bereich von nl/min gefördert werden, scheiden die beiden vorstehend genannten Möglichkeiten in der Regel aus.

Für die vorstehend genannten Anwendungen werden Pumpensysteme benötigt, mit denen extrem kleine Flußraten bzw. Volumenströme erzeugt bzw. gefördert werden können. Die Förderung muß unter den wirksamen hohen Drücken im Bereich von etwa 400 bar mit hoher Zuverlässigkeit erfolgen.

Für die Förderung und Bereitstellung derart kleiner Flußraten in Trennsäulen für die Flüssigkeitschromatographie, insbesondere für die "Capillary-LC-Chromatographie und die "Nano-LC-Chromatographie", sind derzeit die folgenden Methoden bekannt:

Eine erste Methode basiert auf der Verwendung von sogenannten Spritzenpumpen. Dabei handelt es sich um spezielle Ein-Kolben-Pumpen. Im Gegensatz zu den üblichen Kolbenpumpen laufen bei Spritzenpumpen die Kolben während der Analyse nicht hin und her, sondern es findet nur ein einziger Kolbenhub statt. Dadurch arbeiten die Spritzenpumpen stets im Fördermodus. Die Pumpenkammer muß deshalb ausreichend groß dimensioniert werden, damit ein einziger Förderhub für eine komplette Trennanalyse ausreicht. Die Pumpenkammer wird dabei vor der Analyse unter Druck gesetzt, indem der Kolben in der Pumpenkammer nach vorne gedrückt wird. Während der Trennanalyse wird also nicht mehr angesaugt. Mit diesem Verfahren ist ein von den Elastizitäten innerhalb der Pumpenkammer unabhängiger Volumenstrom ermöglicht. Die Elastizitäten insbesondere der Dichtungen, der Antriebsmechanik sowie die Elastizität bedingt durch die Kompressibilität der Lösemittel können entsprechend kompensiert werden.

Die Spritzenpumpen-Technik weist jedoch nur eine geringe Flexibilität auf, was die Realisierung unterschiedlicher Analysenzeiten und die Verwendung verschiedener Säulendurchmesser betrifft. Denn sowohl die mögliche Analysenzeit als auch die Auswahl des Trennsäulendurchmessers ist abhängig und begrenzt durch das jeweils zur Verfügung stehende maximale Hubvolumen der Spritzenpumpen. Ferner kann mit einer Spritzenpumpe stets nur jeweils ein Hochdruckgradient realisiert werden. Dies bedeutet, daß für jedes an der Analyse beteiligte Lösemittel jeweils eine eigene Hochdruckspritzenpumpe benötigt wird.

Ferner spielt bei Fördermengen von wenigen nl/min die Leckrate innerhalb des Fördersystems eine erhebliche Rolle. Die Dichtungen und Ventile, die bei den Hochdruckspritzenpumpen verwendet werden, neigen an sich zu vergleichsweise kleinen Leckagen. Diese können sich jedoch bei derart kleinen Flußraten, wie sie im Bereich der Nano-LC-Chromatographie auftreten, dramatisch auswirken. Selbst Temperatureinflüsse können durch thermische Ausdehnung zu unerwünschten Flußverschiebungen führen. Deshalb sind häufig spezielle Thermostat-Anordnungen und -Regelungen erforderlich.

Eine weitere Möglichkeit zur Erzeugung und Bereitstellung von Flüssigkeits-Volumenströmen in kleine Durchtrittsquerschnitte aufweisenden Kanälen bzw. Kapillaren, bietet die Verwendung herkömmlicher Kolbenpumpen, die für die "Normal-Bore-Chromatographie" geeignet sind. Dabei wird die sogenannte passive Splittertechnologie eingesetzt, welche in der Praxis weit verbreitet ist. Dies bedeutet, daß geeignete Stromteiler verwendet werden, um den durch die Pumpe erzeugten und geförderten Gesamtstrom in wenigstens zwei Teilströme, einen Überschußstrom in einem Überschußpfad und einen Arbeitsstrom in einem Arbeitspfad aufzuteilen.

Die Einstellung und Bereitstellung des in der Trennsäule jeweils gewünschten Arbeitsstromes erfolgt mittels sogenannter Restriktoren, d.h. durch hydraulische Widerstände, die im Überschußpfad angeordnet sind. Die Stromteiler und insbesondere die hydraulischen Widerstände werden meist aus sogenannten "Fused-Silica-Kapillaren" mit kleinen Innendurchmessern aufgebaut. Die Länge und der Innendurchmesser dieser Elemente bestimmen dabei den Strömungswiderstand. Die Gesamtflußrate wird entsprechend der Widerstandsverhältnissen aufgeteilt, wobei üblicherweise der kleinere Teil durch die Trennsäule hindurch fließt.

Ein Vorteil dieser Technologie ist der geringe Herstellungsaufwand, da die Splitter und die hydraulischen Widerstände von den Anwendern selbst hergestellt werden können. Auch die äußerst kleinen Volumina innerhalb der Stromteiler bzw. innerhalb der hydraulischen Widerstände sind dabei vorteilhaft.

Ein besonderer Nachteil der herkömmlichen Splittertechnologie ist es jedoch, daß die Anwender keine Information darüber bekommen, welcher Volumenstrom während der Trennanalyse durch die Trennsäule hindurch fließt. Deshalb muß der Volumenstrom aufwendig, beispielsweise mit Hilfe von Minispritzen unter Verwendung von Stoppuhren ausgemessen werden, um die Trennsäule effizient betreiben zu können. Ferner führen kleinste Fluß-Widerstandsänderungen, beispielsweise verursacht durch verschmutzte Trennsäulenfritten, zu einer erheblichen Veränderung des Säulenstromes. Nicht nur die Trennsäule sondern insbesondere auch die für den Splitter benutzten Restriktionskapillaren, mit einem Durchmesser von beispielsweise 25 $\mu$m, stellen ein großes Verstopfungsrisiko dar. Die Folge derartiger Verstopfungen ist eine dementsprechend große Retentionszeitverschiebung. Noch gravierender kann sich der reduzierte Säulenvolumenstrom auf die oben genannten massenselektiven Detektoren auswirken, weil, wie ebenfalls vorstehend erwähnt, nur ein kleiner dynamischer Flußbereich für eine empfindliche Detektion zur Verfügung steht.

Um diesen Effekt etwas abzumildern, wird teilweise noch ein hydraulischer Vorwiderstand vor dem Splitter eingesetzt. Dadurch wird bei etwa gleichen Druckabfällen über die Trennsäule und dem Vorwiderstand der Einfluß einer verstopften Trennsäulenfritte auf den Säulenstrom in etwa halbiert. Die Verwendung derartiger Vorwiderstände bedeutet jedoch, daß auch nur noch der halbe Pumpendruck für die Trennanalyse in der Trennsäule zur Verfügung steht.

Ein weiterer Nachteil der Splitter-Technologie ist es, daß die beiden Volumina des Arbeitspfades inklusive der Säule und des Überschußpfades auf einander abgestimmt sein müssen, was in der Regel jedoch aus praktischen Gründen nicht realisiert wird. Das "Matching" der Volumina ist deshalb wichtig, damit sich der Splitter bei einer zeitlichen Veränderung der Fließeigenschaften des geförderten Fluids, insbesondere bedingt durch über der Zeit veränderte Zusammensetzungen bzw. Konzentrationen des Fluids, wie es im Gradientenbetrieb immer der Fall ist, gleichmäßig füllt. Ansonsten resultiert daraus eine weitere Verschiebung des Verhältnisses Arbeitsstrom zu Überschußstrom, weil die Viskositäten der Fluide in den Stromzweigen unterschiedlich sind. In der Praxis bedeutet dies, daß für unterschiedliche Säulendimensionen auch immer der Splitter angepaßt werden muß.

Aus der DE 199 14 358 A1 ist ein aktives Splittersystem bekannt, mit dem der Arbeitsstrom gemessen und konstant gehalten werden kann. Zu diesem Zwecke ist in dem Arbeitsstromzweig ein geeigneter Sensor angeordnet und in dem Überschußstromzweig eine variable Restriktion, wobei diese Elemente mit einer Reglervorrichtung unter Ausbildung eines Regelkreises gekoppelt sind.

Ein Vorteil dieser Technik ist es, daß eine für die Chromatographie handelsübliche, beliebige Pumpe eingesetzt werden kann und ein gewünschter geregelter Arbeitsstrom abgezweigt werden kann. Auf diese Weise kann unabhängig von dem hydraulischen Widerstand ein im wesentlichen konstanter Arbeitsstrom erzeugt werden.

Allerdings lassen sich extrem kleine Flußraten von wenigen nl/min nur schwer direkt volumetrisch messen. Außerdem bedeuten im Arbeitsstrom angeordnete Sensoren ein zusätzliches Verzögerungsvolumen. Zusätzliches Volumen bedeutet jedoch stets eine Verlängerung der Analysezeit sowie verzogene bzw. verschobene Gradientenprofile mit der Folge einer geringeren Effizienz der Trennsäule.

Eine weitere Methode basiert auf der Förderung von Flüssigkeiten unter Anwendung eines im wesentlichen konstanten Druckes. Dabei wird ein bestimmter Druck festgelegt, so daß beim Beginn der Applikation die Flüssigkeit mit der gewünschten Flußrate d.h. dem gewünschten Volumenstrom gefördert wird. Der Druck wird über die gesamte Analysezeit im wesentlichen konstant gehalten.

Ein Vorteil dieser Methode ist es, daß der Druck sehr gut gemessen und geregelt werden kann. Dabei wird kein Wert darauf gelegt, welcher Fluß letztendlich durch die Säule fließt. Ferner kann das Verzögerungsvolumen des Arbeitszweigs bzw. -pfads minimal gehalten werden, weil kein Sensorelement zwangsweise im Arbeitsstrom angeordnet sein muß. Der Druck wird üblicherweise im Gesamtstrom gemessen.

Ein Hauptnachteil dieser Technik ist es, daß der Fluß im Arbeitsstrom zunächst auf irgend eine Weise bestimmt werden muß. Zu diesem Zwecke wird häufig eine Mikroliter-Spritze manuell am Ausgang angeschlossen und die geförderte Flußrate ausgelitert. Diese Vorgehensweise ist sehr aufwendig.

Ferner ändert sich bei einer Änderung der Fließeigenschaften, insbesondere der Viskosität der Flüssigkeit über der Zeit oder bei einer Änderung des hydraulischen Widerstandes über der Zeit, die Flußrate, ohne daß dieser Effekt erkannt und berücksichtigt würde. Speziell im Gradientenmodus wird sich bei Anwendung dieser Technik die Flußrate aufgrund der sich über der Zeit ändernden Viskosität des Fluids immer ändern. Denn Gradientenbetrieb bedeutet, daß gezielt über der Zeit ein vorzugsweise lineares Konzentrationsprofil von Lösungsmitteln eingestellt und gefördert wird. Dabei wird in der Regel von wässrigen Lösungen auf organische Lösungen übergegangen.

Speziell bei massenselektiven Detektoren in Verbindung mit den dabei eingesetzten Ionisierungsquellen ist die Konstanz der "Antwort" des Detektors von der aktuellen Flußrate abhängig. Weil sich bei einer ausschließlich auf Druckregelung basierenden Technik der Fluß im Gradientenbetrieb signifikant verschiebt, muß der Sprayer ein konstantes Spray über ein größeren Flußbereich abliefern. Dies ist speziell bei sogenannten Nano-Elekrosprayern für sehr kleine Flußraten technisch sehr aufwendig.

Demgemäß ist es eine Aufgabe der Erfindung ein Verfahren der eingangs bereichneten Art zur Verfügung zu stellen, mit dem über der Zeit insbesondere unterschiedliche Fließeigenschaften aufweisende Fluide mit im wesentlichen konstanten Flußraten gefördert werden können, auch ohne daß es einer direkten Messung derart kleiner Flußraten bedarf.

Diese Aufgabe wird gemäß einem ersten Lösungsgedanken erfindungsgemäß durch die Merkmale des Anspruches 1, insbesondere dadurch gelöst, daß die folgenden Schritte vorgesehen sind:

a) Erfassung eines zeitlichen Referenz-Druckverlaufes mit Hilfe der Druckmeßvorrichtung in dem Arbeitskanal, während mit Hilfe der Fördervorrichtung ein vorzugsweise im wesentlichen konstanter, vorbestimmbarer Referenz-Volumenstrom eines über der Zeit insbesondere unterschiedliche Fließeigenschaften aufweisenden Fluids durch den Arbeitskanal gefördert wird;

b) Berechnung eines zeitlichen Arbeits-Druckverlaufes, der einem vorzugsweise im wesentlichen konstanten, gegenüber dem Referenz-Volumenstrom verschiedenen, vorzugsweise kleineren Arbeits-Volumenstrom durch den Arbeitskanal zugeordnet ist, der für einen nachfolgenden Arbeitsprozeß, insbesondere für eine nachfolgende Trenn- bzw. Stoff-Analyse gewünscht ist, unter Anwendung eines vorbestimmbaren mathematischen Algorithmus;

c) Förderung eines Fluids durch den Arbeitskanal, das vorzugsweise über der Zeit dieselben Fließeigenschaften wie das in Schritt a) verwendete Fluid aufweist, unter Anwendung des in Schritt b) berechneten zeitlichen Arbeits-Druckverlaufes, während der gewünschte Arbeitsprozeß, insbesondere die Trenn- bzw. Stoffanalyse durchgeführt wird.

Durch diese Maßnahmen können selbst extrem kleine Flußraten, wie Sie bei der Nano-LC-Technik in chromatographischen Trennsäulen oder in Microfluid-Systemen, insbesondere in Microfluid-Chips auftreten, reproduzierbar gefördert und kontrolliert bzw. geregelt werden. Bei der Förderung durch die Fördervorrichtung, beispielsweise eine Pumpe, spielt es keine Rolle, ob der Arbeitsstrom direkt erzeugt wird oder aber nur ein Teilstrom eines Gesamtstroms ist. Es ist nur eine Vorrichtung notwendig, mit deren Hilfe der Druck erfaßt werden kann, der sich bei einer gegebenen Flußrate ergibt. Ferner muß nur irgend eine Möglichkeit gegeben sein die Flußrate zu ermitteln. Dies kann manuell oder vorteilhaft automatisch geschehen.

Sofern die Messung des Referenz-Volumenstroms mit Hilfe eines oder mehrerer Sensoren durchgeführt wird, spielt es vorteilhafter Weise keine Rolle, an welchen genauen Positionen innerhalb des System die Sensoren plaziert sind. Mithin sind deren Positionen entsprechend den Anwenderbedürfnissen frei wählbar. So kann beispielsweise eine Flußkontrolle durchaus auch am Ende, also in Fließrichtung nach der Trennsäule durchgeführt werden. Auf diese Weise kann vorteilhaft vermieden werden, daß sensorbedingt ein zusätzliches Verzögerungsvolumen geschaffen wird, welches zu den vorstehend genannten Nachteilen führen würde.

Die Erfindung macht sich den Zusammenhang zwischen Druck und Fluß in einem Microfluid-System, insbesondere einem chromatographischen Trennsystem vorteilhaft zu Nutze. Zur Durchführung des erfindungsgemäßen Verfahrens ist es zweckmäßig, wenn eine Reglervorrichtung zur Regelung des Druckes in dem Arbeitskanal und eine Reglervorrichtung zur Regelung des Volumenstromes in dem Arbeitskanal eingesetzt wird, die alternativ betreibbar sind, so daß bei Schritt a) der Referenz-Volumenstrom im wesentlichen konstant gehalten wird und so daß bei Schritt c) der Arbeitsdruck im wesentlichen konstant gehalten wird.

Wie vorstehend beschrieben, ist eine volumenstromgeregelte Förderung durchaus erwünscht. Wesentliche Vorteile betreffen eine maximale Effektivität des Mikrofluid-Systems, insbesondere eine maximale Trennleistung der Säule und optimierte Spraybedingungen für den Eingang eines massenselektiven Detektors.

Der anzuwendende Algorithmus kann beispielsweise dadurch bestimmt werden, daß ein oder mehrere Referenz-Messungen, jeweils mit einem Fluid durchgeführt werden, das über der Zeit dieselben unterschiedlichen Fließeigenschaften, also den gleichen zeitlichen Fließeigenschaftsverlauf aufweist. Bei diesen Referenzmessungen wird jeweils ein unterschiedlicher, jedoch hinreichend großer Referenz-Volumenstrom eingestellt, so daß dieser mit den zur Verfügung stehenden Meßmethoden mit hinreichender Genauigkeit gemessen werden kann. Für die direkte Durchflußmessung eignet sich insbesondere ein Massendurchflußsensor oder ein volumetrischer Durchflußmesser. Eine derartige direkte Messung des Volumenstromes kann mit Hilfe eines oder mehrerer geeigneter Sensoren erfolgen. Aufgrund der Messung des Volumenstromes kann unter Verwendung einer geeigneten Reglervorrichtung der Volumenstrom in einem Regelkreis derart geregelt werden, daß dieser über der Zeit im wesentlichen konstant gehalten wird.

Bei dem über der Zeit unterschiedliche Fließeigenschaften aufweisenden Fluid handelt es sich zweckmäßigerweise um einen Fluid-Gradienten. Dieser wird vorteilhaft derart gebildet, daß zwei Flüssigkeiten, vorzugsweise Wasser und eine organische Lösung, insbesondere Acetonitril, über der Zeit in wechselseitig unterschiedlichen Konzentrationen gemischt und die Fluidmischung der Trennsäule zugeführt wird. Dabei wird vorteilhafter Weise die Konzentrationen von Wasser linear verringert und zugleich die Konzentration der organischen Lösung erhöht.

Vorteilhafter Weise wird als mathematischer Algorithmus die folgende Gleichung angewendet:

$$P_A = P_R \cdot k \cdot V_A / V_R$$

wobei $P_A$ der Arbeitsdruck, $P_R$ der Referenz-Druck, $k$ eine Variable oder ein Faktor, $V_A$ der Arbeits-Volumenstrom und $V_R$ der Referenz-Volumenstrom ist.

Es ist ferner vorteilhaft, wenn bei dem mathematischen Algorithmus für $k$ der Faktor eins verwendet wird. Dies ist insbesondere bei einem chromatographischen Trennsystem von Vorteil, wobei während der Analyse bzw. Stoff-Trennung in der Trennsäule eine lineare Fließgeschwindigkeit von etwa 1 bis 5 mm/sec bei laminarer Strömung angestrebt ist.

Gemäß einem alternativen Lösungsgedanken der Erfindung können bei einem gattungsgemäßen Verfahren mit den eingangs beschriebenen Merkmalen die folgenden Schritte vorgesehen sein:

a) Erfassung eines zeitlichen Referenz-Druckverlaufes mit Hilfe der Druckmeßvorrichtung in einem als Referenzkanal dienenden Arbeitskanal, der einen Referenz-Durchflußquerschnitt aufweist, während mit Hilfe der Fördervorrichtung ein vorzugsweise im wesentlichen konstanter, vorbestimmbarer Referenz-Volumenstrom eines über der Zeit insbesondere unterschiedliche Fließeigenschaften aufweisenden Fluids durch den Referenz-Kanal gefördert wird;

b) Förderung eines Fluids durch den Arbeitskanal, das vorzugsweise über der Zeit dieselben Fließeigenschaften wie das in Schritt a) verwendete Fluid aufweist, wobei der Arbeitskanal einen gegenüber dem Referenz-Durchflußquerschnitt des Referenz-Kanals verschiedenen Arbeits-Durchflußquerschnitt aufweist, unter Anwendung eines zeitlichen Arbeits-Druckverlaufes, der dem in Schritt a) erfaßten zeitlichen Referenz-Druckverlauf entspricht.

Bei diesem Lösungsgedanken wird der Referenz-Volumenstrom zweckmäßig so gewählt, daß sich in dem Referenz-Kanal eine im wesentlichen konstante, lineare Fließgeschwindigkeit einstellt, die für die Durchführung des zweiten Schrittes, also dem eigentlichen Arbeitsprozeß der Analyse zweckmäßig ist. Diese lineare Fließgeschwindigkeit wird bei chromatographischen Trennsäulen, abhängig vom Teilchendurchmesser des Packungsmaterials, zweckmäßig im Bereich von 1 bis 5 mm/sec gewählt, wobei der zugehörige Referenz-Volumenstrom experimentell oder über eine bekannte Gleichung berechenbar ist.

In dem zweiten Schritt wird durch das "Nachfahren" desselben Arbeits-Druckverlaufes über der Zeit wie im ersten Schritt erreicht, daß in dem vorzugsweise einen sehr kleinen Arbeits-Durchflußquerschnitt aufweisenden Arbeits-Kanal, wie er insbesondere bei chromatographischen Trennsäulen für die LC-Technik verwendet wird, dieselbe lineare Fließgeschwindigkeit auftritt, wie bei dem ersten Schritt. Dies ergibt sich aus der Erkenntnis, daß in Kanälen, die einen unterschiedlichen Querschnitt aufweisen, sich bei Anwendung desselben Druckprofils jeweils dieselben linearen Fließgeschwindigkeiten einstellen.

Mit einem Verfahren gemäß der zweiten Lösungsalternative lassen sich grundsätzlich dieselben Vorteile erreichen, wie bei dem Verfahren gemäß der ersten Lösungsalternative. Ein zusätzlicher Vorteil des zweiten Lösungsgedankens ist es, daß der Zwischenschrittes der Berechnung eines transformierten Druckverlaufes entfallen kann. Allerdings müssen bei diesem Verfahren zwei Kanäle mit jeweils unterschiedlichem Durchflußquerschnitt, insbesondere zwei einen unterschiedlichen Durchmesser aufweisende Kapillaren verwendet werden, während bei der ersten Lösungsalternative die Referenz-Messung und die Arbeits-Applikation in ein und demselben Arbeitskanal durchgeführt werden können.

Beide Verfahrensalternativen bieten den Vorteil, daß unmittelbar mit dem Arbeitskanal gearbeitet werden kann, so daß die in dem aktuellen Arbeitssystem vorliegenden Randbedingungen berücksichtigt werden, die einer theoretischen Vorhersage nicht oder nur mit ganz erheblichem Aufwand zugänglich sind. Vorteilhafter Weise wird bei der Durchführung der Schritte a) und c) der ersten Verfahrensalternative gemäß Anspruch 1 jeweils derselbe Arbeitskanal bzw. dieselbe Trennsäule verwendet. Es ist jedoch auch möglich, bei der Durchführung dieser beiden Schritte jeweils nicht denselben Arbeitskanal bzw. nicht dieselbe Trennsäule zu verwenden, wie dies bei der zweiten Verfahrensalternative gemäß Anspruch 4 der Fall ist. In diesen Fällen ist es zweckmäßig, wenn bei der Durchführung der Schritte a) und c) gemäß Anspruch 1 oder bei der Durchführung der Schritte a) und b) gemäß Anspruch 4 jeweils Arbeitskanäle mit im wesentlichen gleichen hydraulischen Widerständen verwendet werden. Bei einer Verwendung von chromatographischen Trennsäulen ist es ferner zweckmäßig, wenn diese im wesentlichen die gleiche Länge aufweisen und wenn deren Packungen mit Partikeln versehen sind, die eine im wesentliche gleiche Partikeleigenschaft, insbesondere Partikelgröße, Partikelgrößenverteilung und/oder Porosität aufweisen. Durch diese Maßnahmen lassen sich zusätzliche Korrekturen bzw. Korrekturparameter vermeiden. Zu diesem Zwecke ist es vorteilhaft, wenn die hydraulischen Widerstände bzw. Restriktionen der Arbeitskanäle bzw. Trennsäulen bei gleicher linearer Fließgeschwindigkeit im wesentlichen gleich sind. Auf diese Weise werden unterschiedliche Gradientenselektivitäten vermieden.

Bei beiden Verfahren ist es zweckmäßig, ein gegebenenfalls in den Arbeitskanälen vorhandenes Verzögerungsvolumen, insbesondere zwischen einer Mischstelle, an der das über der Zeit unterschiedliche Fließeigenschaften aufweisende Fluid gebildet wird und der Trennsäule 23, derart zu berücksichtigen, daß der Zeitpunkt der Anwendung des zeitlichen Arbeits-Druckverlaufes um eine bestimmte Differenz-Verzögerungszeit angepaßt gewählt wird. Mithin wird auf diese Weise eine Verzögerungszeitkorrektur vorgenommen, die bei vorhandenen Verzögerungsvolumina sinnvoll erscheint, um zu noch präziseren Ergebnissen zu gelangen.

Es ist ferner zweckmäßig, wenn bei Anwendung des im wesentlichen konstanten Referenz-Volumenstromes eine Referenz-Verzögerungszeit für das Fluid, beispielsweise experimentell, bestimmt wird, nachfolgend das Verzögerungsvolumen als Produkt der Referenz-Verzögerungszeit und des Referenz-Volumenstromes sowie eine Arbeits-Verzögerungszeit als Quotient des Verzögerungsvolumens und des gewählten Arbeits-Volumenstromes sowie die Differenz-Verzögerungszeit als Betrag der Differenz der Arbeits-Verzögerungszeit und der Referenz-Verzögerungszeit berechnet wird. Um diese Differenz-Verzögerungszeit können dann die Arbeits-Druckveräufe gegenüber den Referenz-Druckverläufen später angewendet werden. Mit anderen Worten können die Arbeits-Druckveräufe unter Beibehalt ihres relativen zeitlichen Verlaufes in einfacher Weise um die Differenz-Verzögerungszeit verschoben werden. Nachdem es zweckmäßig ist, in den jeweiligen Referenz-Kanälen mit vergleichsweise hohen Förder-Volumenströmen zu arbeiten, die einer hinreichend genauen Messung zugänglich sind, während bei dem eigentlichen Arbeitsschritt bzw. Arbeitsprozeß nur extrem kleine Volumenströme durch die sehr kleine Durchflußquerschnitte aufweisenden Arbeits-Kanäle gefördert werden, wird bei dem Arbeitsprozeß der Trennanalyse der zeitliche Beginn der Anwendung des jeweiligen zeitlichen Arbeits-Druckverlaufes zu entsprechend längeren Zeiten nach hinten verschoben. Auf diese Weise wird also diejenige Zeit berücksichtigt, die das Fluid zur Überwindung des Verzögerungsvolumens bei Anwendung des zeitlichen Arbeits-Druckverlaufes benötigt. Auf diese Weise kann die Trennanalyse, bei den extrem kleinen Durchflußraten bzw. Volumenströmen in einer maximalen Präzision durchgeführt werden.

Weitere Vorteile, Merkmale und Gesichtspunkte der Erfindung sind dem nachfolgenden Beschreibungsteil entnehmbar, in dem zwei bevorzugte Ausführungsbeispiele anhand der Figuren näher beschrieben sind.

Es zeigen:

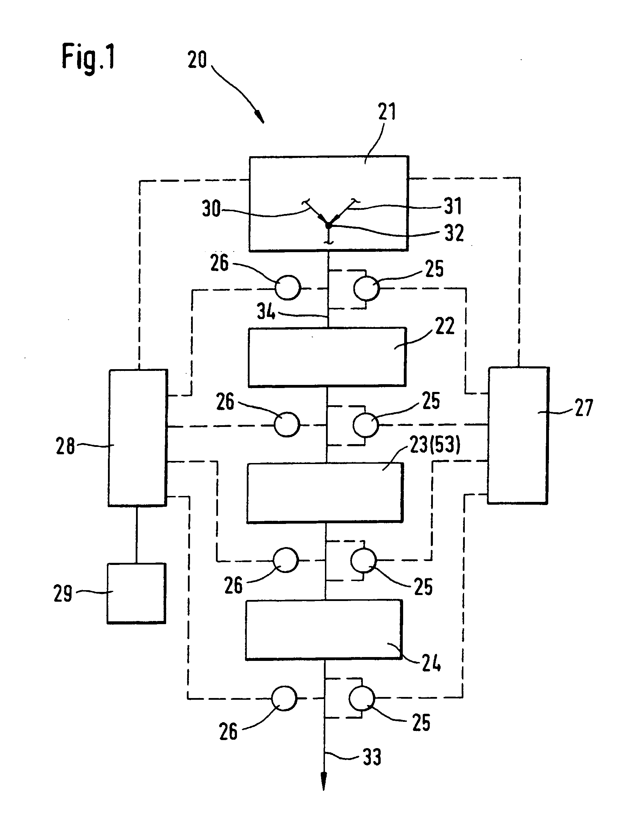

Figur 1:     Eine schematische Ansicht einer Vorrichtung zur Durchführung des erfindungsgemäßen Verfahrens;

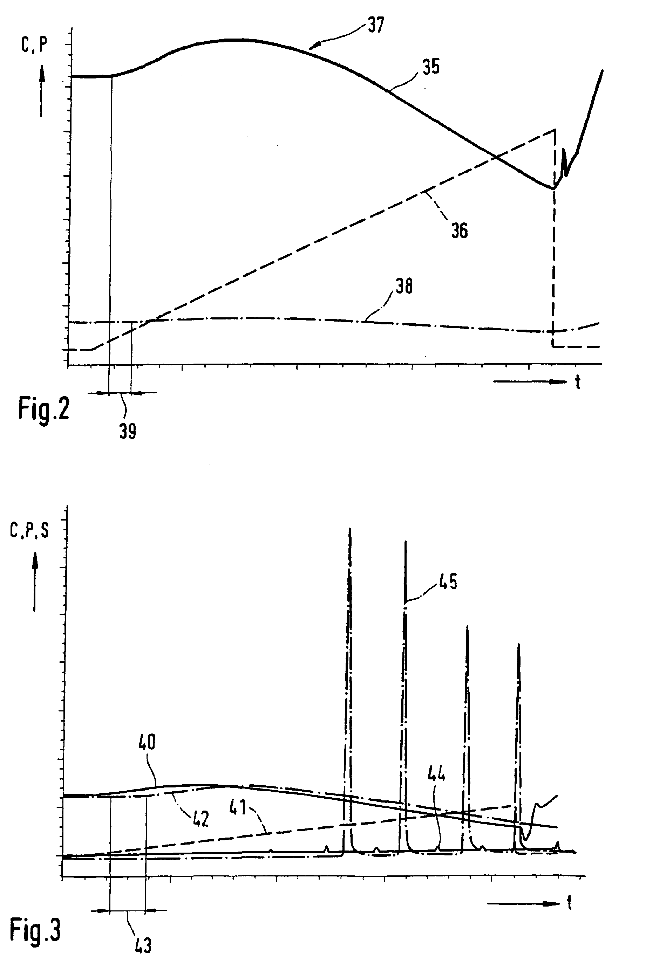

Figur 2:     eine Darstellung zweier zeitlicher Druckprofile und eines zeitlichen Konzentrationsprofils einer Flüssigkeit, die ein Bestandteil einer über der Zeit unterschiedliche Fließeigenschaften aufweisenden Flüssigkeit ist, die bei der Durchführung des Verfahrens gemäß einer ersten Lösungsalternative auftreten können;

Figur 3:     eine Darstellung zweier Druckprofile, eines Konzentrationsprofils einer Flüssigkeit, die ein Bestandteil einer über der Zeit unterschiedliche Fließeigenschaften aufweisenden Flüssigkeit ist und zweier zugehöriger Signalverläufe, jeweils über der Zeit, die bei der Durchführung des Verfahrens gemäß einer zweiten Lösungsalternative auftreten können.

Die Figur 1 zeigt eine Vorrichtung 20 zur Durchführung des erfindungsgemäßen Verfahrens. Die Vorrichtung bildet im vorliegenden Fall ein chromatographisches Trennsystem. Dieses umfaßt als wesentliche Komponenten eine Pumpe 21, eine Probenaufnahme 22 bzw. Injektionsstelle, eine Trennsäule 23 und einen Detektor 24.

Um einen Gradientenbetrieb ermöglichen zu können, ist im Bereich der Pumpe 21 ein erster Pfad 30 und ein zweiter Pfad 31 vorgesehen, die in einen gemeinsamen Mischpunkt 32 einmünden. Bei der Durchführung einer Trennanalyse wird das Fluid 34 von der als Fördervorrichtung dienenden Pumpe 21, ausgehend von dem Mischpunkt 32 durch die Probenaufnahme 22 und die Trennsäule 23 zu dem Detektor gefördert. Von dort aus kann das resultierende Fluid in einem oder mehreren nicht näher gezeigten Behältern aufgenommen werden.

Zur Erfassung des Volumenstromes des Fluids 34 können ein oder mehrere Flußsensoren 25 vorgesehen sein. Der bzw. jeder Flußsensor 25 ist dafür geeignet, vergleichsweise große Volumenströme mit hinreichender Genauigkeit in einem vertretbaren Aufwand erfassen bzw. messen zu können. Der Flußsensor 25 kann an unterschiedlichen Positionen innerhalb des Trennsystems angebracht sein. Die gestrichelten Linien, welche von dem jeweiligen Flußsensor 25 zu dem Arbeitskanal 33 reichen, bedeuten, daß der Sensor 25 wahlweise in dem hydraulischen Pfad, also dem Arbeitskanal 33 eingebracht sein oder in einem Bypaß zu diesem betrieben werden kann.

Zur Messung des Druckes in dem Arbeitskanal 33 können ein oder mehrere Drucksensoren 26 an einer beliebigen geeigneten Stelle vorgesehen sein. Werden mehrere Drucksensoren 26 verwendet, können diese zu einer Differenzdruckbildung herangezogen werden.

Die Vorrichtung 20 umfaßt ferner die Reglervorrichtung 27 und die Reglervorrichtung 28. Die Reglervorrichtung 27 dient dazu, die mit Hilfe der Flußsensoren 25 oder sonst wie gemessenen Volumenströme zur Regelung des Volumenstromes über die Pumpe 21 in einer Regelstrecke im wesentlichen konstant halten zu können. Die Reglervorrichtung 27 ermöglicht also einen Betrieb der Pumpe 21 in einem volumenstromgeregelten Modus. Demgegenüber dient die Reglervorrichtung 28 dazu, die mit Hilfe zumindest einer der Drucksensoren gemessenen Drücke zur Regelung des durch die Pumpe 21 geförderten Volumenstromes in einer zweiten Regelstrecke im wesentlichen konstant halten zu können. Folglich ermöglicht die Reglervorrichtung 28 einen alternativen Betrieb der Pumpe 21 in einem druckgeregelten Modus.

Mit der Reglervorrichtung 28 kann eine Speicher- und Recheneinrichtung 29 gekoppelt sein, mit der die gemessenen Drücke insbesondere in der Form von zeitlichen Druckprofilen abgespeichert und für spätere Arbeitsdurchgänge und/oder Auswertungen in einer geeigneten Form verfügbar gemacht werden können.

Nachfolgend wird das erfindungsgemäße Verfahren zur Bereitstellung von Volumenströmen von Fluiden 34 in kleine Durchflußquerschnitte aufweisenden Kanälen bzw. Kapillaren, insbesondere chromatographischen Trennsäulen 23, für die analytische Flüssigkeitsmeßtechnik bzw. die analytische Flüssigkeitschromatographie anhand zweier Lösungsalternativen näher beschrieben.

Beiden Verfahrensvarianten gemeinsam ist es, daß eine Fördervorrichtung, hier die Pumpe 21, zur Förderung eines Volumenstromes des Fluids 34 durch einen Arbeitskanal 33 und eine Druckmeßvorrichtung, hier der wenigstens eine Drucksensor 26, zum Messen des Druckes in dem Arbeitskanal 33 verwendet werden. Ferner muß bei beiden Verfahrensvarianten auf irgendeine Weise der Volumenstrom des Fluids 34 erfaßt werden können. Hierzu wird in den Ausführungsbeispielen zumindest einer der Flußsensoren 25 eingesetzt.

Das erfindungsgemäße Verfahren findet vorteilhafterweise dort seinen Einsatz, wo ein über der Zeit unterschiedliche Fließeigenschaften aufweisendes Fluid durch den Arbeitskanal gefördert werden soll. Unterschiedliche Fließeigenschaften über der Zeit können bei Fluiden auftreten, deren Zusammensetzung sich über der Zeit verändert. Dies ist insbesondere regelmäßig im sogenannten Gradientenbetrieb der Fall. Dort wird typischer Weise die Konzentration zweier Flüssigkeiten derart, vorzugsweise jeweils linear über der Zeit verändert, daß die Konzentration der ersten Flüssigkeit reduziert wird, während zeitgleich die Konzentration der zweiten Flüssigkeit erhöht wird. Als erstes Fluid wird insbesondere Wasser verwendet, während als zweites Fluid ein organisches Lösemittel, vorzugsweise Acetonitril eingesetzt wird. Die erste Flüssigkeit wird über einen ersten Pfad 30 und die zweite Flüssigkeit wird über einen zweiten Pfad 31 dem gemeinsamen Mischpunkt 32 zugeführt.

Ab diesem Mischpunkt wird das sich ausbildende Fluid 34 mit Hilfe der Pumpe 21 insbesondere durch die Trennsäule 23 gefördert.

Gemäß der ersten Verfahrensalternative wird in einem ersten Schritt, eine Referenz-Messung durchgeführt. Dabei wird mit Hilfe wenigstens einer der Drucksensoren 26 ein zeitlicher Referenz-Druckverlauf in dem Arbeitskanal 33 erfaßt, während mit Hilfe der Pumpe 21 im Gradientenbetrieb ein im wesentlichen konstanter Referenz-Volumenstrom des Fluids 34 über der Zeit gefördert wird. Die Refernez-Messung wird also mit Hilfe der Reglervorrichtung 27 volumenstromgeregelt durchgeführt. Der Referenz-Volumenstrom wird dabei vergleichsweise groß gewählt, um eine hinreichend genaue Erfassung desselben, beispielsweise mit Hilfe einer der Flußsensoren 25 zu ermöglichen. Der dabei resultierende Druckverlauf 35 über der Zeit wird zweckmäßiger Weise mit Hilfe einer Speichereinheit der Speicher- und Recheneinrichtung 29 abgespeichert.

Ein dabei exemplarisch auftretender Referenz-Druckverlauf 35 ist in Figur 2 über der Zeit anhand der durchgezogenen Linie veranschaulicht. Der Referenz-Volumenstrom beträgt in diesem Fall 590 nl/min. Der zeitparallele Konzentrationsverlauf 36 von Acetonitril ist anhand der gestrichelten Linie ebenfalls in Figur 2 dargestellt, wobei innerhalb einer bestimmten Zeit die Konzentration linear erhöht wird. Der zeitliche Konzentrationsverlauf des Wassers ist nicht dargestellt, verläuft jedoch umgekehrt, d.h. die Konzentration wird zeitparallel verringert.

Wie aus Figur 2 gut ersichtlich, ergibt sich bei der volumenstromgeregelten Förderung des Fluids 34 mit einem im wesentlichen konstanten Volumenstrom ein nicht linearer Referenz-Druckverlauf 35. Nach einer bestimmten Analysenzeit, tritt respektive im Bereich bestimmter Konzentrationen der Mischung von Wasser und Acetonitril eine Druckerhöhung 37 auf. Diese Druckerhöhung 37 ergibt sich daraus, daß die Viskosität des eine Mischung von Wasser und Acetonitril bildenden Fluids 34 bei einem bestimmten Konzentrationsverhältnis größer ist als die Viskosität von reinem Wasser. Mithin ändern sich die Fließeigenschaften des Fluids 34 über der Versuchszeit nicht unerheblich.

Nachdem in dem ersten Schritt der Druckverlauf 37 bei einem vergleichsweise hohen Volumenstrom gemessen wurde, wird gemäß der ersten Verfahrensalternative, der während der Referenz-Messung erfaßte und in der Speichereinheit abgespeicherte zeitliche Referenz-Druckverlauf 35 mit Hilfe einer Recheneinheit der Rechen- und Speichereinrichtung 29 unter Anwendung eines mathematischen Algorithmus in einen zeitlichen Arbeits-Druckverlauf 38 umgerechnet, der einem im wesentlichen konstanten Arbeits-Volumenstrom durch den Arbeitskanal 33 zugeordnet ist. Dieser Arbeits-Volumenstrom ist entsprechend den gewünschten Flußverhältnissen bei der Trennanalyse deutlich kleiner als bei der Referenz-Messung und beträgt bei dem in Figur 2 gezeigten Ausführungsbeispiel 59 nl/min.

Der dabei angewendete mathematische Algorithmus genügt der Gleichung

$$P_A = P_R \cdot V_A / V_R$$

wobei $P_A$ der Arbeitsdruck, $P_R$ der Referenz-Druck, $V_A$ der Arbeits-Volumenstrom und $V_R$ der Referenz-Volumenstrom ist. Mit Hilfe dieser Gleichung werden also die zeitlichen Referenz-Druckwerte in die für die Trennanalyse geeigneten zeitlichen Arbeits-Druckwerte umgerechnet. Auf diese Weise kann ein entsprechender Arbeits-Druckverlauf berechnet und in der Speichereinheit abgespeichert werden.

Anschließend kann die Trennanalyse durchgeführt werden, indem in dem Arbeitskanal 33 derselbe zeitliche Konzentrationsverlauf der das Fluid 34 ausbildenden Flüssigkeiten realisiert wird und indem der in der Speichereinheit abgespeicherte Arbeits-Druckverlauf mit Hilfe der Reglervorrichtung 28 exakt nachgefahren wird. Folglich wird die Trennanalyse selbst druckgeregelt durchgeführt. Der entsprechende Arbeitsdruckverlauf 38 ist in Figur 2 anhand der strich-punktierten Linie veranschaulicht.

Die exakte Anwendung des aus dem Referenz-Druckverlauf 35 berechneten Arbeits-Druckverlaufes 38 während der Durchführung der Trennanalyse stellt sicher, daß diese bei dem gewünschten extrem kleinen, und zwar im wesentlichen konstanten Arbeits-Volumenstrom des Fluids 34, durchgeführt werden kann, auch und gerade ohne daß es einer Messung des Arbeits-Volumenstromes bedarf.

Zwischen dem Mischpunkt 32 und der Trennsäule 23 ist ein bestimmtes Totvolumen ausgebildet, das ein bestimmtes Verzögerungsvolumen darstellt. Um den Einfluß dieses Totvolumens zu berücksichtigen, wird zweckmäßigerweise eine Totzeitkorrektur vorgenommen. Dies bedeutet, daß der Zeitpunkt der Anwendung des zeitlichen Arbeits-Druckverlaufes gegenüber dem Zeitpunkt der Anwendung des Referenz-Druckverlaufes um eine bestimmte Differenz-Totzeit nach hinten, also zu späteren Zeiten hin verschoben wird. Diese Differenz-Totzeit bedeutet eine bestimmte Differenz-Verzögerungszeit.

Die Differenz-Totzeit läßt sich beispielsweise dadurch bestimmen, daß bei Anwendung des im wesentlichen konstanten Referenz-Volumenstromes eine Referenz-Verzögerungszeit in Form einer Referenz-Totzeit für das Fluid 34 experimentell bestimmt wird, beispielsweise unter Verwendung sogenannter Totzeitmarker bzw. Verzögerungszeitmarker. Anschließend kann das Totvolumen des Systems als Produkt der Referenz-Totzeit und des Referenz-Volumenstromes sowie eine Arbeits-Totzeit als Quotient des Totvolumens und des gewählten Arbeits-Volumenstromes berechnet werden. Diese Arbeits-Totzeit entspricht einer bestimmten Arbeits-Verzögerungszeit. Aus der Arbeits-Totzeit und der Referenz-Totzeit läßt sich in einfacher Weise durch betragsmäßige Differenzbildung eine Differenz-Totzeit berechnen, die einer bestimmten Differenz-Verzögerungszeit entspricht. Um diese Differenz-Totzeit 39 kann dann der Arbeits-Druckverlauf 38 gegenüber den Referenz-Druckverlauf 35 später angewendet werden, wie aus Figur 2 ersichtlich. Auf diese Weise wird also diejenige zusätzliche Zeit berücksichtigt, die das Fluid zur Überwindung des Totvolumens bei Anwendung des zeitlichen Arbeits-Druckverlaufes benötigt.

Die zweite Verfahrensalternative läßt sich in zwei wesentliche Verfahrensschritte unterteilen. In einem ersten Schritt wird ebenfalls eine Referenz-Messung durchgeführt, bei der ein zeitlicher Referenz-Druckverlauf 40 mit Hilfe wenigstens einer der Drucksensoren 26 gemessen wird, während mit Hilfe der Pumpe 21 im Gradientenbetrieb ein im wesentlichen konstanter Referenz-Volumenstrom des Fluids 34 durch einen Referenz-Kanal gefördert wird. Auch diese Referenz-Messung wird also mit Hilfe der Reglervorrichtung 27 volumenstromgeregelt durchgeführt.

Im Gegensatz zu der ersten Verfahrensalternative wird bei der zweiten Verfahrensalternative eine Referenz-Messung mit einer Referenz-Säule 53 durchgeführt. Deren Referenz-Durchflußquerschnitt ist gegenüber dem Durchflußquerschnitt der Trennsäule 23 deutlich größer. Aus Vereinfachungsgründen ist die Referenz-Säule 53 in Figur 1 nicht separat gezeichnet, sondern es wurde nur das Bezugszeichen 53 in runden Klammern angegeben. In dem Ausführungsbeispiel das der Darstellung in Figur 3 zu Grunde liegt, beträgt der Durchmesser der Referenzsäule 53 einen Millimeter, während der Durchmesser der Trennsäule 23 nur 0,1 Millimeter beträgt.

Auch bei der zweiten Verfahrensalternative wird der Referenz-Volumenstrom vergleichsweise groß gewählt, um eine hinreichend genaue Erfassung desselben, beispielsweise mit Hilfe einer der Flußsensoren 25 zu ermöglichen. Der dabei resultierende Referenz-Druckverlauf 40 über der Zeit wird zweckmäßiger Weise ebenfalls mit Hilfe einer Speichereinheit der Speicher- und Recheneinrichtung 29 abgespeichert. Der Referenz-Volumenstrom wird bei dieser Verfahrensalternative derart eingestellt, daß in der Referenzsäule 53 eine laminare lineare Fließgeschwindigkeit von vorzugsweise 1 bis 5 mm/sec erreicht wird. Dieser Wert der Fließgeschwindigkeit hat sich bei der Trennanalyse in Trennsäulen als vorteilhaft erwiesen.

Der bei einer derartigen Referenz-Messung mit einer einen Durchmesser von 1 mm aufweisenden Referenz-Kapillare exemplarisch auftretende Referenz-Druckverlauf 40 ist in Figur 3 anhand der durchgezogenen Linie über der Zeit veranschaulicht. Der Referenz-Volumenstrom beträgt in diesem Fall 50 μl/min. Der zeitparallele Konzentrationsverlauf 41 des Acetonitril ist anhand der gestrichelten Linie ebenfalls in Figur 3 dargestellt, wobei wiederum innerhalb einer bestimmten Zeit die Konzentration linear erhöht wird. Der nicht dargestellte zeitliche Konzentrationsverlauf von Wassers verläuft auch hier umgekehrt, d.h. die Wasser-Konzentration wird zeitparallel verringert.

Wie auch aus Figur 3 gut ersichtlich, ergibt sich bei der volumenstromgeregelten Förderung des Fluids 34 mit einem im wesentlichen konstanten Referenz-Volumenstrom ein nicht linearer Referenz-Druckverlauf 40, wobei nach einer bestimmten Zeit, respektive im Bereich bestimmter Konzentrationen der Mischung von Wasser und Acetonitril auch hier eine Druckerhöhung auftritt.

In einem zweiten Schritt wird anschließend die Arbeitsmessung bzw. die Trennanalyse durchgeführt indem wiederum derselbe zeitliche Konzentrationsverlauf der das Fluid 34 ausbildenden Flüssigkeiten in dem Arbeitskanal 33 realisiert wird und indem mit Hilfe der Reglervorrichtung 28 der in der Speichereinheit abgespeicherte zeitliche Referenz-Druckverlauf in der Form eines identischen Arbeits-Druckverlaufes über der Zeit identisch nachgefahren wird. Folglich wird auch bei der zweiten Verfahrensalternative die Trennanalyse selbst druckgeregelt durchgeführt, jedoch bei jeweils gleichen zeitlichen Druckverläufen. Bei dieser Verfahrensalternative macht man sich die Erkenntnis zu Nutze, daß bei gleichen Drücken bzw. zeitlichen Druckverläufen die jeweils resultierenden linearen Fließgeschwindigkeiten in den dünnen Kanälen bzw. Kapillaren ebenfalls übereinstimmen. Mithin wird bei dem Nachfahren des zeitlichen Referenz-Druckverlaufes bei der Trennanalyse in der Trennsäule ebenfalls dieselbe lineare Fließgeschwindigkeit von vorzugsweise 1 bis 2 mm/sec erreicht. Das Nachfahren des Referenz-Druckverlaufes während der Trennanalyse führt zu einem im wesentlichen konstanten Arbeits-Volumenstrom, der in dem der Figur 3 zu Grunde liegenden Ausführungsbeispiel 50 nl/min beträgt.

Aus Figur 3 ist auch der Vorteil einer Trennsäule mit einem kleinen Durchflußquerschnitt gut ersichtlich. Während bei Verwendung einer Referenz-Säule 53 mit einem Innendurchmesser von 1,0 mm, die von dem Detektor 24 erfaßten, mit einer durchgezogenen Linie dargestellten Detektorsignale 44 kaum erkennbar sind, werden bei Verwendung einer Trennsäule 23 mit einem Innendurchmesser von nur 0,1 mm die strich-punktiert dargestellten Detektorsignale 45 in Höhe und Breite bei gleicher Probenmenge deutlich differenzierbar.

Auch bei Anwendung dieser Verfahrensalternative für Trennanalysen in chromatographischen Trennsäulen ist es zweckmäßig, eine Totzeit-Korrektur vorzunehmen und die Anwendung des zeitlichen Druckprofils bei der eigentlichen Analyse, bedingt durch den dabei kleineren Arbeits-Volumenstrom, zeitlich um die einer bestimmten Differenz-Verzögerungszeit entsprechende Differenz-Totzeit 43 nach hinten zu verschieben. Das Verfahren zur Bestimmung der Differenz-Totzeit 43 entspricht der vorstehend im Zusammenhang mit der ersten Verfahrensalternative abgehandelten Vorgehensweise, so daß insoweit darauf verwiesen werden kann.

Es versteht sich, daß aufgrund der jeweils druckgeregelten Durchführung der Trennanalysen, die Flußrate bzw. die Volumenströme in sinnvollen Zeitabständen kontrolliert und ggf. korrigiert werden sollten. Eine Kontrolle der Volumenströme wird zweckmäßiger Weise vor jeder Analyse durchgeführt. Dies ist besonders wichtig wenn mehrere Proben hintereinander automatisch getrennt werden sollen. Denn insbesondere bedingt durch Schmutzablagerungen auf einer Fritte kann sich der hydraulische Widerstand eines Trennsystems ändern, mit der Folge von veränderten Durchflußraten durch den Arbeitskanal. Eine Kontrolle der Volumenströme kann sowohl manuell als auch mit Hilfe von Sensoren erfolgen.

Beispielsweise kann ein chromatographisches Verfahren durchgeführt werden, wobei die Durchlaufzeit eines Stoffes von der Einspritzung bis zur Detektion gemessen wird. Vorteilhaft hierfür sind Substanzen, die nicht auf der Trennsäule zurückgehalten werden, also sogenannte Totzeitmarker bzw. Verzögerungszeitmarker. Diese Stoffe werden exakt in der aktuellen Fließgeschwindigkeit mit transportiert, so daß deren Durchlaufzeit ein Maß für die aktuelle Flußrate ist. Zweckmäßiger Weise wird dabei die Zusammensetzung des Lösungsmittels 34 im Kanal 33 konstant gehalten.

Eine Flußmessung kann auch indirekt erfolgen. Beispielsweise kann der Ionisierungsstrom einer Ionenquelle eines massenselektiven Detektors herangezogen werden. Es ist bekannt, daß sich die Ionendichte abhängig von der Flußrate verändert. Durch entsprechende Kalibriermessungen bei ansonsten unveränderten Bedingungen kann der Ionisierungsstrom als indirektes Maß für den Volumenstrom ausgewertet werden.

Sofern bei einer Kontrolle des Volumenstromes festgestellt wird, daß sich dieser verändert hat, kann in einfacher Weise durch entsprechende Anhebung des Druckniveaus bei der druckgeregelten Verfahrensweise während der Trennanalyse sichergestellt werden, daß sich im Arbeitskanal wieder der gewünschte, im wesentlichen konstante Volumenstrom einstellt.

**Patentansprüche**

1. Verfahren zur Bereitstellung von Volumenströmen von Fluiden (34) in kleine Durchflußquerschnitte aufweisenden Kanälen bzw. Kapillaren, insbesondere chromatographischen Trennsäulen (23), für die analytische Flüssigkeitsmeßtechnik, wobei eine Fördervorrichtung (21) zur Förderung eines Volumenstromes des Fluids (34) durch einen Arbeitskanal (33) und eine Druckmeßvorrichtung (26) zum Messen des Druckes in dem Arbeitskanal (33) vorgesehen ist, und wobei eine Messung des Volumenstromes möglich ist, **gekennzeichnet durch** die folgenden Schritte:

   a) Erfassung eines zeitlichen Referenz-Druckverlaufes (35) mit Hilfe der Druckmeßvorrichtung (26) in dem Arbeitskanal (33), während mit Hilfe der Fördervorrichtung (21) ein Referenz-Volumenstrom eines über der Zeit insbesondere unterschiedliche Fließeigenschaften aufweisenden Fluids (34) **durch** den Arbeitskanal (33) gefördert wird;
   b) Berechnung eines zeitlichen Arbeits-Druckverlaufes (38), der einem gegenüber dem Referenz-Volumenstrom verschiedenen Arbeits-Volumenstrom **durch** den Arbeitskanal (33) zugeordnet ist, unter Anwendung eines vorbestimmbaren mathematischen Algorithmus;
   c) Förderung eines Fluids (34) **durch** einen Arbeitskanal (33), unter Anwendung des in Schritt b) berechneten zeitlichen Arbeits-Druckverlaufes (38), wobei der gewünschte Arbeitsprozeß vorgenommen wird.

2. Verfahren nach Anspruch 1, **dadurch gekennzeichnet, daß** als mathematischer Algorithmus die folgende Gleichung angewendet wird:

$$P_A = P_R \cdot k \cdot V_A / V_R$$

wobei $P_A$ der Arbeitsdruck, $P_R$ der Referenz-Druck, $\cdot k$ eine Variable oder ein Faktor, $V_A$ der Arbeits-Volumenstrom und $V_R$ der Referenz-Volumenstrom ist.

3. Verfahren nach Anspruch 2, **dadurch gekennzeichnet, daß** für k der Faktor eins verwendet wird.

4. Verfahren zur Bereitstellung von Volumenströmen von Fluiden (34) in kleine Durchflußquerschnitte aufweisenden Kanälen bzw. Kapillaren, insbesondere chromatographischen Trennsäulen (23), für die analytische Flüssigkeitsmeßtechnik, wobei eine Fördervorrichtung (21) zur Förderung eines Volumenstromes des Fluids (34) durch einen Arbeitskanal (33) und eine Druckmeßvorrichtung (26) zum Messen des Druckes in dem Arbeitskanal (33) vorgesehen ist, und wobei eine Messung des Volumenstromes möglich ist, **gekennzeichnet durch** die folgenden Schritte:

   a) Erfassung eines zeitlichen Referenz-Druckverlaufes (40) mit Hilfe der Druckmeßvorrichtung (26) in einem als Referenz-Kanal (53) dienenden Arbeitskanal (33), der einen Referenz-Durchflußquerschnitt aufweist, während mit Hilfe der Fördervorrichtung (21) ein Referenz-Volumenstrom eines über der Zeit insbesondere unterschiedliche Fließeigenschaften aufweisenden Fluids (34) **durch** den Arbeitskanal (33) gefördert wird;
   b) Förderung eines Fluids (34) **durch** einen Arbeitskanal (33), der einen gegenüber dem Referenz-Durchflußquerschnitt des Referenz-Kanals (53) verschiedenen Arbeits-Durchflußquerschnitt aufweist, unter Anwendung eines zeitlichen Arbeits-Druckverlaufes (42), der dem in Schritt a) erfaßten zeitlichen Referenz-Druckverlauf (40) entspricht.

5. Verfahren nach einem der Ansprüche 1 bis 4, **dadurch gekennzeichnet, daß** bei der Durchführung der Schritte a) und c) gemäß Anspruch1 oder bei der Durchführung der Schritte a) und b) gemäß Anspruch 4 jeweils Arbeitskanäle mit im wesentlichen gleichen hydraulischen Widerständen verwendet werden.

6. Verfahren nach Anspruch 5, **dadurch gekennzeichnet, daß** bei Verwendung von chromatographischen Trennsäulen diese im wesentlichen die gleiche Länge aufweisen und daß deren Packungen mit Partikeln versehen sind, die eine im wesentliche gleiche Partikeleigenschaft aufweisen.

7. Verfahren nach einem der Ansprüche 1 bis 6, **dadurch gekennzeichnet, daß** bei einem in dem Arbeitskanal gegebenen Verzögerungsvolumen, insbesondere zwischen einer Mischstelle (32), an der das über der Zeit unterschiedliche Fließeigenschaften aufweisende Fluid (34) gebildet wird und der Trennsäule 23, derart berücksichtigt wird, daß der Arbeits-Druckverlauf (38, 42) um eine Differenz-Verzögerungszeit (39, 43) angepaßt angewendet wird.

8. Verfahren nach einem der Ansprüche 1 bis 7, **dadurch gekennzeichnet, daß** bei Anwendung des im wesentlichen konstanten Referenz-Volumenstromes eine Referenz-Verzögerungszeit für das Fluid (34) bestimmt wird, nachfolgend das Verzögerungsvolumen als Produkt der Referenz-Verzögerungszeit und des Referenz-Volumenstromes sowie eine Arbeits-Verzögerungszeit als Quotient des Verzögerungsvolumens und des gewählten Arbeits-Volumenstromes sowie die Differenz-Verzögerungszeit (39, 43) als Betrag der Differenz der Arbeits-Verzögerungszeit und der Referenz-Verzögerungszeit berechnet wird

## Claims

1. A method for the supply of volume streams of fluids (34) in channels or capillaries with small stream cross sections, more particularly in chromatographic separation columns (23) for analytical fluid metrology, wherein a delivery device (21) for the delivery of a volume stream of the fluid (34) through an operating channel (33) and a pressure measuring device (26) for measuring the pressure in the operating channel (33) is provided, wherein a measurement of the volume stream is possible, **characterized by** the following steps:

   a) Recording a reference time development of the pressure (35), using the pressure measuring device (26) in the operating channel (33), while the delivery device (21) delivers a reference volume stream through the operating channel (33) of a fluid (34) with properties, more particularly flow properties, varying over time;
   b) Calculation of a time development of the operating pressure (38), which corresponds to the operating volume stream through the operating channel (33), which is different from the reference volume stream, using a pre-determinable mathematical algorithm;
   c) Delivery of a fluid (34) through an operating channel (33), utilizing the time development of the operating pressure (38) determined in step b), wherein the desired work process is performed.

2. A method according to claim 1, **characterized in that** the following equation is used as the mathematical algorithm:

$$P_A = P_R \cdot k \cdot V_A / V_R$$

   where $P_A$ is the operating pressure, $P_R$ is the reference pressure, k is a variable or a factor, $V_A$ is the operating volume stream, and $V_R$ is the reference volume stream.

3. A method according to claim 2, **characterized in that** the factor one is used for k.

4. A method for the supply of volume streams of fluids (34) in channels or capillaries with small stream cross sections, more particularly in chromatographic separation columns (23) for analytical fluid metrology, wherein a delivery device (21) for the delivery of a volume stream of the fluid (34) through an operating channel (33) and a pressure measuring device (26) for measuring the pressure in the operating channel (33) is provided, wherein a measurement of the volume stream is possible, **characterized by** the following steps:

   a) Recording a reference time development of the pressure (40), using the pressure measuring device (26) in a operating channel (33), used as a reference channel (53), wherein this channel has a reference stream cross section, while the delivery device (21) delivers a reference volume stream through the operating channel (33) of a fluid (34) with properties, more particularly flow properties, varying over time (26);

b) Delivery of a fluid (34) through an operating channel (33), which has an operating stream cross section that is different from the reference stream cross section of the reference channel (53), using a time development of the operating pressure (42) that corresponds to the time development of the reference pressure (40) determined in step a).

5. A method according to one of the claims 1 to 4, **characterized in that** operating channels with essentially equal hydraulic resistance are used for performing the steps a) and c) according to claim 1 or for performing the steps a) and b) according to claim 4.

6. A method according to claim 5, **characterized in that** the chromatographic separation columns used have essentially the same length and that their packing contains particles that have an essentially identical particle property.

7. A method according to one of the claims 1 to 6, **characterized in that** a delay volume in the operating channel is taken into consideration, wherein the delay volume is formed in particular between a mixing point (32) where the fluid with time-varying flow properties (34) is mixed and the separating column 23, and wherein the operating pressure course (38, 42) is corrected for a corresponding difference delay time (39, 43).

8. A method according to one of the claims 1 to 7, **characterized in that**, when the essentially constant reference volume stream is applied, a reference delay time is determined for the fluid (34) first, from which the delay volume is derived as the product of the reference delay time and the reference volume stream and the operating delay time is calculated as the quotient of delay volume and the selected operating volume stream, and wherein these values are used to determine the difference delay time (39, 43) as the absolute value of the difference between the operating delay time and the reference delay time.

## Revendications

1. Procédé pour fournir des débits volumétriques de fluides (34) dans des canaux ou des capillaires présentant des petites sections de passage du fluide, en particulier dans des colonnes de rectification chromatographiques (23), pour la technique analytique de mesure de liquides, un dispositif de transport (21) pour le transport d'un débit volumétrique du fluide (34) à travers un canal de travail (33) et un dispositif de mesure de pression (26) pour mesurer la pression dans le canal de travail (33) étant prévus, et une mesure du débit volumétrique étant possible,

caractérisé par les étapes suivantes :

a) Saisie d'une courbe temporelle de pression de référence (35) à l'aide du dispositif de mesure de la pression (26) disposé dans le canal de travail (33), pendant qu'un débit volumétrique de référence d'un fluide (34) présentant notamment différentes caractéristiques d'écoulement au cours du temps est transporté à travers le canal de travail (33) à l'aide du dispositif de transport (21) ;
b) Calcul d'une courbe temporelle de pression de travail (38), qui correspond à un débit volumétrique de travail différent, par rapport au débit volumétrique de référence, à travers le canal de travail (33) en appliquant un algorithme mathématique pouvant être prédéterminé ;
c) Transport d'un fluide (34) à travers un canal de travail (33) en appliquant la courbe temporelle de pression de travail (38) calculée à l'étape b), le processus de travail souhaité étant exécuté.

2. Procédé selon la revendication 1, **caractérisé en ce que** l'équation suivante est appliquée en tant qu'algorithme mathématique :

$$P_A = P_R \cdot k \cdot V_A / V_R$$

$P_A$ étant la pression de travail, $P_R$ la pression de référence, k une variable ou un facteur, $V_A$ le débit volumétrique de travail et $V_R$ le débit volumétrique de référence.

3. Procédé selon la revendication 2, **caractérisé en ce que** le facteur un est utilisé pour k.

4. Procédé pour fournir des débits volumétriques de fluides (34) dans des canaux ou des capillaires présentant des petites sections de passage du fluide, en particulier dans des colonnes de rectification chromatographiques (23) pour la technique analytique de mesure de liquides, un dispositif de transport (21) pour le transport d'un débit volumétrique du fluide (32) à travers un canal de travail (33) et un dispositif de mesure de pression (26) pour mesurer la pression dans le canal de travail (33) étant prévus, et une mesure du débit volumétrique étant possible, **caractérisé par** les étapes suivantes :

a) Saisie d'une courbe temporelle de pression de référence (40) à l'aide du dispositif de mesure de la pression (26) disposé dans un canal de travail (33) servant de canal de référence (53), ce canal de travail présentant une section de passage de référence, pendant qu'un débit volumétrique de référence d'un fluide (34) présentant notamment différentes caractéristiques d'écoulement au cours du temps est transporté à travers le canal de travail (33) à l'aide du dispositif de transport (21) ;

b) Transport d'un fluide (34) à travers un canal de travail (33) qui, par rapport à la section d'écoulement de référence du canal de référence (53'), présente une section d'écoulement de travail différente, en appliquant une courbe temporelle de pression de travail (42) qui correspond à la courbe temporelle de pression de référence (40) saisie à l'étape a).

5. Procédé selon l'une quelconque des revendications 1 à 4, **caractérisé en ce que**, lors de la réalisation des étapes a) et c) selon la revendication 1 ou lors de la réalisation des étapes a) et b) selon la revendication 4, des canaux de travail ayant des résistances hydrauliques essentiellement identiques sont respectivement utilisés.

6. Procédé selon la revendication 5, **caractérisé en ce que** lors de l'utilisation de colonnes de rectification chromatographiques, celles-ci présentent essentiellement la même longueur et **en ce que** leurs garnissages sont munis de particules qui présentent une caractéristique de particule essentiellement identique.

7. Procédé selon l'une quelconque des revendications 1 à 6, **caractérisé en ce qu'**un volume de retard donné dans le canal de travail, en particulier entre un point de mélange (32), auquel le fluide (34) présentant différentes caractéristiques d'écoulement au cours du temps est formé, et la colonne de rectification 23, est pris en compte de telle manière que la courbe de pression de travail (38, 42) soit appliquée en étant adaptée d'un temps de différence de retard (39, 43).

8. Procédé selon l'une quelconque des revendications 1 à 7, **caractérisé en ce que**, lors de l'application du débit volumétrique de référence essentiellement constant, un temps de retard de référence est déterminé pour le fluide (34), qu'ensuite le volume de retard est calculé comme le produit du temps de retard de référence et du débit volumétrique de référence, ainsi qu'un temps de retard de travail est calculé comme le quotient du volume de retard et du débit volumétrique de travail sélectionné ainsi que le temps de différence de retard (39, 43) est calculé comme le montant de la différence entre le temps de retard de travail et le temps de retard de référence.

**Fig.1**

Fig.2

Fig.3